**Europäisches Patentamt**

**European Patent Office**

**Office européen des brevets**

(19)

(11) Veröffentlichungsnummer **0 004 901**
**B1**

# EUROPÄISCHE PATENTSCHRIFT

(12)

(45) Veröffentlichungstag der Patentschrift
17.02.82

(51) Int Cl.³ **H 04 M 19/08**, H 04 M 1/31

(21) Anmeldenummer 79101011.9

(22) Anmeldetag 03.04.79

(54) Schaltungsanordnung für über Anschlussleitungen gespeiste Teilnehmerstationen mit Wähleinrichtungen in Fernmelde-, insbesondere Fernsprechanlagen.

(30) Priorität 14.04.78 DE 2816347
14.04.78 DE 2816311

(43) Veröffentlichungstag der Anmeldung
31.10.79 Patentblatt 79/22

(45) Bekanntmachung des Hinweises auf die Patenterteilung
17.02.82 Patentblatt 82/7

(84) Benannte Vertragsstaaten.
CH FR GB IT SE

(56) Entgegenhaltungen
DE-A-2 210 852
FR-A-2 325 255
FR-A-2 397 111

(73) Patentinhaber **SIEMENS AKTIENGESELLSCHAFT Berlin und München, Postfach 22 02 61, D-8000 München 22 (DE)**

(72) Erfinder **Hartmann, Karl Dieter, Strassberger Strasse 22, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art 99(1) Europäisches Patentübereinkommen)

## Schaltungsanordnung für über Anschlußleitungen gespeiste Teilnehmerstationen mit Wähleinrichtungen in Fernmelde-, insbesondere Fernsprechanlagen

Die Erfindung betrifft eine Schaltungsanordnung für über Anschlußleitungen gespeiste Teilnehmerstationen mit Wähleinrichtungen in Fernmelde-, insbesondere Fernsprechanlagen, mit einer nur drei Anschlußpunkte aufweisenden Wähleinrichtung zur Erzeugung von Nummernschalterimpulsen, wobei die elektronische Impulserzeugerschaltung über einen Teil einer Doppel-Graetz-Brücke, die zwei Brückenzweige gemeinsam für beide Brücken aufweist, gespeist wird

Eine derartige Schaltungsanordnung ist z. B aus der FR-A-2 325 255 bekannt. Bei dieser bekannten Schaltungsanordnung geht es im wesentlichen darum, das bistabile Relais NSA nach Inbetriebnahme der Teilnehmerstation in eine definierte Ausgangslage zu bringen Hierzu ist ein parallel zu dem Speise- und Sendestromkreis der eigentlichen Wähleinrichtung hochohmiger Parallelstromkreis vorgesehen, der über eine der beiden Brücken der Doppel-Graetz-Brücke gespeist wird Das heißt, daß bei dieser bekannten Schaltungsanordnung die Speisung der eigentlichen Wähleinrichtung lediglich über eine der beiden Brucken der Doppel-Graetz-Brücke erfolgt.

Bei modernen Teilnehmerstationen besteht nun der Wunsch, nicht nur einfache elektronische Impulserzeugerschaltungen, wie z. B. bei der sogenannten Pseudotastwahl (siehe z. B. den Tastwahlblock TBW 75 der Deutschen Bundespost), als Wähleinrichtungen über eine dreipolige Steckverbindung in die Anschlußleitung einzuschalten, sondern auch Wähleinrichtungen mit Kurzwahl- und Wahlwiederholungsmöglichkeit. Hierzu sind in einem besonderen Speicher Rufnummern abzuspeichern, die durch eine spezielle Kurzwahlprozedur ausgesendet werden Zur Realisierung dieser Funktionen sind umfangreiche Schaltungsmaßnahmen notwendig, die aus der Telefonleitung oder über eine externe Stromversorgung gespeist werden müssen. Bisher waren für diese Funktionen umfangreiche Eingriffe in die Fernsprecherschaltung notwendig, da bei Realisierung der obengenannten Funktionen eine Speisung nicht nur im Wählzustand, sondern auch im Sprechzustand der Teilnehmerstation notwendig ist, da sonst ohne weitgehende Maßnahmen keine Signalisierung von Anfang und Ende einer Rufnummer möglich ist. Gleichzeitig darf aber im Sprechzustand die von der Postverwaltung geforderte Einfügungsdämpfung, die durch zur Sprechschaltung parallele Verbraucher hervorgerufen wird, nicht überschritten werden.

Die Aufgabe der vorliegenden Erfindung besteht darin, eine Schaltungsanordnung der eingangs genannten Art so auszubilden, daß die Wähleinrichtungen auch Kurzwahlvorrichtungen bzw. Wahlwiederholungsvorrichtungen enthalten können und während des Sprechzustandes die Einfügungsdämpfung derart gering ist, daß die zugelassenen Werte nicht überschritten werden.

Eine Lösung dieser Aufgabe für eine Schaltungsanordnung der eingangs genannten Art is dadurch gekennzeichnet, daß die Speisung de gesamten Wähleinrichtung über die Doppel Graetz-Brücke erfolgt, und daß in der Zuleitun einer der beiden Brücken ein Widerstan eingefügt ist, wobei mittels eines nsa-Kontakte im Sprechzustand die Brucke mit dem Wider stand wirksamgeschaltet ist, während im Wahl zustand die Brücke ohne Widerstand wirksam geschaltet ist.

Bei dieser Lösung wird zwischen Wähl- un Sprechzustand unterschieden, so daß die Bruk kenschaltung im Sprechzustand mit Hilfe de zusätzlichen Widerstandes hochohmiger als ir Wählzustand geschaltet werden kann Dadurc ergibt sich der Vorteil, daß auch ein Anschlu von Wähleinrichtungen mit Kurzwahl- un Wahlwiederholungsmöglichkeiten ohne Eingri fe in die Teilnehmerstationen möglich ist un gleichzeitig die Forderungen der Postverwaltun bezüglich Einfügungsdämpfung und Polungsur abhängigkeit erfüllt werden.

Eine andere Lösung der Aufgabe der vorlie genden Erfindung für eine Schaltungsanordnun gemäß dem Oberbegriff des Anspruches 2 is dadurch gekennzeichnet, daß während de Sprechzustandes der Transistor unmittelba über einen in der Wähleinrichtung vorhandene freien, im Sprechzustand geschlossenen Kontak überbrückt wird und sein Basisstromkreis unter brochen wird. Der Vorteil dieser erfindungsge mäßen Lösung besteht darin, daß durch di Abtrennung des Transistors während de Sprechzustandes die Einfügungsdämpfung ir nerhalb der vorgegebenen Werte eingehalte werden kann, da der Speisestrom für di Wähleinrichtung nicht über den Transistc fließen muß und der dafür erforderliche Basis strom als zusätzlicher Verbraucher zur vorhande nen Wähleinrichtung entfällt.

Aus der DE-A-2 210 852 ist eine Schaltungsar ordnung für über Anschlußleitungen gespeist Teilnehmerstationen mit Wähleinrichtungen i Fernmelde-, insbesondere Fernsprechanlage bekannt, bei der zur Erzeugung von Nummern schalterimpulsen ein durch einen Transistc gebildeter steuerbarer Impulskontakt vorgese hen ist, der während des Sprechzustandes de Teilnehmerstation überbrückt wird. Der Unte schied zwischen dieser bekannten Schaltung anordnung und dem Anmeldungsgegenstan besteht darin, daß bei der bekannten Scha tungsanordnung während des Sprechzustande nicht nur der Transistor überbrückt wird, sonde in Reihe mit dem Transistor auch die Stromve sorgung der gesamten Wähleinrichtung, so da eine Speisung der Wähleinrichtung während de Sprechzustandes nicht gegeben ist.

Anhand einer Zeichnung wird die Erfindung i

folgenden näher beschrieben.

Es zeigt:

Fig. 1 ein Ausführungsbeispiel der Erfindung, bei dem die Speisung der Wähleinrichtung über eine Doppel-Graetz-Brücke erfolgt, und

Fig. 2 ein Ausführungsbeispiel der Erfindung, bei welchem der als Impulskontakt dienende Transistor der Wähleinrichtung während des Sprechzustandes überbrückt wird.

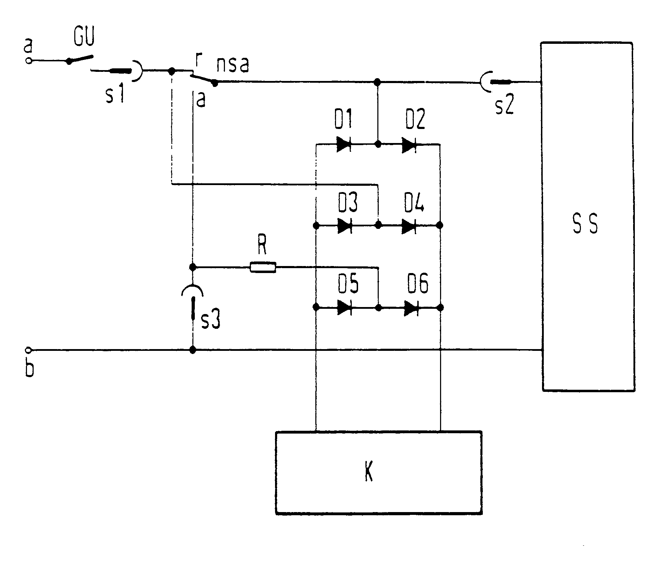

Fig. 1 zeigt im einzelnen eine an die beiden Adern a und b einer Anschlußleitung anschaltbare Sprechschaltung SS. Weiterhin ist über eine dreipolige Steckverbindung mit den Anschlußpunkten s1 bis s3 beispielsweise der Anschluß einer Wähleinrichtung K gezeigt.

Die dargestellte Schaltungsanordnung ist im Ruhezustand dargestellt, d. h. der Handapparat ist aufgelegt, was durch den geöffneten Gabelumschalter GU angezeigt wird.

Im Sprechzustand fließt der Strom z. B. von der a-Ader kommend über den geschlossenen Gabelumschalter GU, den Anschlußpunkt s1, den sich in seiner Ruhelage r befindlichen nsa-Kontakt und über den Anschlußpunkt s2 in die Sprechschaltung SS und von dort über die b-Ader wieder zurück zur Vermittlungsstelle. Dadurch entsteht zwischen den Anschlußpunkten s2 und s3 eine Spannung einer vorgegebenen Polarität, die über den Widerstand R und die Dioden D5 oder D6 und D1 oder D2 polungsrichtig abgegriffen werden kann. Die Dimensionierung des Widerstandes R richtet sich nach dem Stromverbrauch der Kurzwahleinrichtung und der zugelassenen Einfügungsdämpfung. Statt eines ohmschen Widerstandes kann auch eine Drossel in die Zuleitung eingefügt werden.

Im Wählzustand fließt der Strom z. B. von der a-Ader kommend über den geschlossenen Gabelumschalter GU, den Anschlußpunkt s1 und die Diode D3 oder D4 in die Wähleinrichtung K. Von dort fließt der Strom weiter über die Diode D1 oder D2 zum nsa-Kontakt, der sich aufgrund des Wählzustandes in seiner Arbeitslage a befindet, und von dort über den Anschlußpunkt s3 und die b-Ader zurück zur Vermittlungsstelle. Die Sprechschaltung SS sowie der Widerstand R sind kurzgeschlossen und von der a-Ader getrennt, so daß die Wähleinrichtung K die notwendigen Wählimpulse aussenden kann.

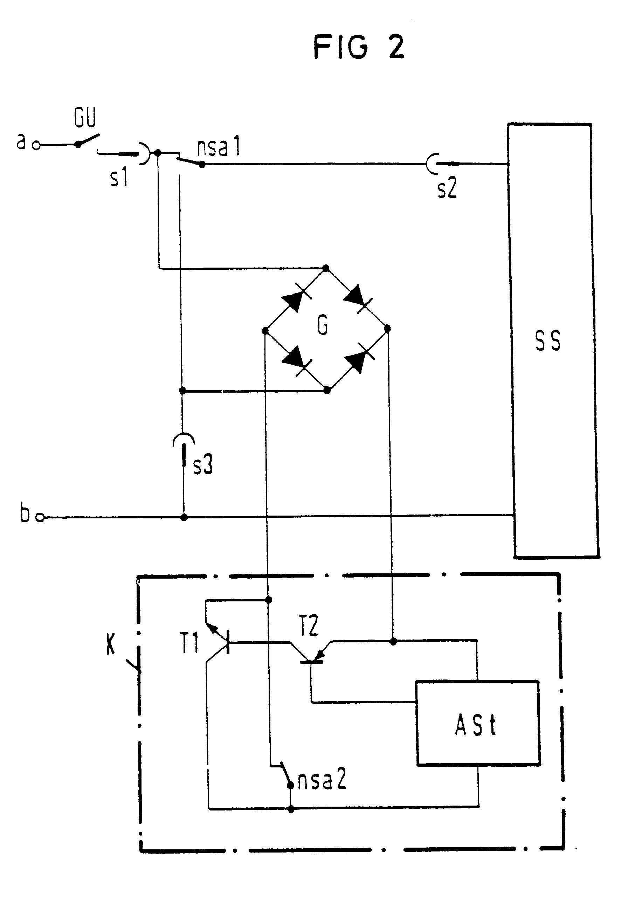

Fig. 2 zeigt im einzelnen eine an die beiden Adern a und b angeschlossene Sprechschaltung SS sowie die drei Anschlußpunkte s1 bis s3 für die Anschaltung einer Wähleinrichtung K, die im dargestellten Ausführungsbeispiel mit der Möglichkeit für Zielwahl und Wahlwiederholung ausgestattet sein soll. Weiterhin sind dargestellt eine bisher übliche Gleichrichterbrücke G, ein nsa1-Kontakt des NSA-Relais, sowie die Wähleinrichtung K mit zwei Transistoren T1 und T2, einem nsa2-Kontakt und der dazugehörigen übrigen Ansteuerschaltung ASt.

Aus Fig. 2 ergibt sich schematisch die Speisung der Wähleinrichtung K über die Dreipunktanschaltung. Bei abgehobenem Handapparat sind die Anschlußpunkte s1 und s2 über die Teilnehmerleitung mit der Vermittlungseinrichtung über die a-Ader verbunden, da der Gabelumschalter GU geschlossen ist. Die Sprechschaltung SS ist an den Anschlußpunkten s2 und s3 angeschlossen.

Im Sprechzustand sind die Anschlußpunkte mit s1 und s2 über den in seiner Ruhelage befindlichen nsa1-Kontakt miteinander verbunden. Über die Gleichrichterbrücke G wird parallel zur Sprechschaltung SS an den Anschlußpunkten s1 und s3 ein Strom abgezweigt, der über den geschlossenen nsa2-Kontakt die gesamte Wähleinrichtung K versorgt. Dabei ist über eine in der Wähleinrichtung K vorhandene Logikschaltung der Transistor T2 gesperrt, so daß der Transistor T1, der als steuerbarer Impulskontakt für die Impulserzeugung arbeitet, keinen Basisstrom erhält. Somit ist dieser zusätzlich zur übrigen Wähleinrichtung K bestehende Verbraucher abgeschaltet.

Während des Wählzustandes sind die Anschlußpunkte s2 und s3 über den dann in seiner Arbeitslage befindlichen nsa1-Kontakt miteinander verbunden. Dabei wird die Verbindung zwischen den Anschlußpunkten s1 und s2 geöffnet, so daß die Sprechschaltung SS kurzgeschlossen ist. Über die Gleichrichterbrücke G fließt der volle Schleifenstrom zur Wähleinrichtung K. Der nsa2-Kontakt ist geöffnet, und der Transistor T2 wird von der in der Wähleinrichtung K vorhandenen Logikschaltung leitend geschaltet, so daß der Transistor T1 Basisstrom erhält und er Schleifenstrom über den Transistor T1 fließen kann. Mit Hilfe des Transistors T1 kann dann entsprechend der Nummernschalterimpulse der Schleifenstrom kurzzeitig unterbrochen werden.

## Patentansprüche

1. Schaltungsanordnung für über Anschlußleitungen (a, b) gespeiste Teilnehmerstationen mit Wähleinrichtungen (K) in Fernmelde-, insbesondere Fernsprechanlagen, mit einer nur drei Anschlußpunkte (s1 bis s3) aufweisenden Wähleinrichtung zur Erzeugung von Nummernschalterimpulsen, wobei die elektronische Impulserzeugerschaltung über einen Teil einer Doppel-Graetz-Brücke (D1 bis D6), die zwei Brückenzweige (D1, D2) gemeinsam für beide Brücken (D1 bis D4; D1, D2, D5, D6) aufweist, gespeist wird, dadurch gekennzeichnet, daß die Speisung der gesamten Wähleinrichtung (K) über die Doppel-Graetz-Brücke (D1 bis D6) erfolgt, und daß in der Zuleitung einer der beiden Brücken (D1, D2, D5, D6) ein Widerstand (R) eingefügt ist, wobei mittels eines nsa-Kontaktes (nsa) im Sprechzustand die Brücke (D1, D2, D5, D6) mit dem Widerstand (R) wirksamgeschaltet ist, während im Wählzustand die Brücke ohne Widerstand (D1 bis D4) wirksamgeschaltet ist.

2. Schaltungsanordnung für über Anschlußleitungen (a, b) gespeiste Teilnehmerstationen mit Wähleinrichtungen (K) in Fernmelde-, insbesondere Fernsprechanlagen, mit einer nur drei Anschlußpunkte (s1 bis s3) aufweisenden Wähleinrichtung zur Erzeugung von Nummernschalterimpulsen, die über eine Gleichrichterbrücke (G) gespeist wird, wobei der durch eine elektronische Impulserzeugerschaltung steuerbare Impulskontakt durch einen Transistor (T1) gebildet wird, dadurch gekennzeichnet, daß wahrend des Sprechzustandes der Transistor (T1) unmittelbar über einen in der Wähleinrichtung vorhandenen freien, im Sprechzustand geschlossenen Kontakt (nsa2) überbrückt wird und sein Basisstromkreis unterbrochen wird.

### Claims

1. A circuit arrangement for subscriber stations, which are fed via connection lines (a, b), and which are provided with dialling devices (K) in telecommunications systems and in particular telephone systems, comprising a dialling device which possesses only three connection points (s1 to s3) and which serves to generate dial switch pulses, wherein the electronic pulse generator circuit is fed via a part of a double-Graetz-bridge (D1 to D6) which possesses two bridge arms (D1, D2) which are common to the two bridges (D1 to D4; D1, D2, D5, D6), characterised in that the entire dialling device (K) is fed via the double-Graetz-bridge (D1 to D6), and that a resistor (R) is interposed in the supply line of one of the two bridges (D1, D2, D5, D6), wherein, by means of a nsa-contact (nsa), in the speech state the bridge (D1, D2, D5, D6) is rendered operative with the resistor (R), whereas in the dialling state the bridge is rendered operative without the resistor (D1 to D4)

2 Circuit arrangement for subscriber stations which are fed via connection lines (a, b) and which possess dialling devices (K) in telecommunications systems, in particular telephone systems, comprising a dialling device which possesses only three connection points (s1 to s3) and which serves to generate dial switch pulses and which is fed via a rectifier bridge (G), wherein the pulse contact which can be controlled by an electronic pulse generating circuit is formed by a transistor (T1), characterised in that during the speech state the transistor (T1) is directly bridged via an independent contact (nsa2) which is contained in the dialling device and is closed in the speech state, and its base circuit is interrupted.

### Revendications

1. Montage pour des postes téléphoniques à dispositifs de sélection (K), alimentés par des lignes d'abonnés (a, b), dans des installations de télécommunications, en particulier dans des installations téléphoniques du type comportant un dispositif de sélection à seulement trois points de raccordement (s1 a s3) pour produire des impulsions de cadran d'appel, le montage électronique qui produit les impulsions étant alimenté par une partie d'un double pont de Graetz (D1 à D6) ayant deux branches de pont (D1, D2) en commun pour les deux ponts (D1 à D4; D1, D2, D5, D6), caractérisé par le fait que l'alimentation de la totalité du dispositif de sélection (K) est opérée, a partir du double pont de Graetz (D1 à D6) et que dans le conducteur d'alimentation de l'un des deux ponts (D1, D2, D5, D6) est montée une résistance (R), le pont (D1, D2, D5, D6) étant, à l'état de conversation, commuté avec la résistance (R) dans son état efficace à l'aide d'un contact nsa (nsa), alors qu'à l'état de sélection le pont (D1 à D4) est commuté dans son état efficace sans la résistance.

2. Montage pour les postes téléphoniques à dispositifs de sélection (K), alimentés par des lignes d'abonnés (a, b), dans des installations de télécommunications, en particulier dans des installations téléphoniques du type comportant un dispositif de sélection à seulement trois points de raccordement (s1 à s3) pour produire des impulsions de cadran d'appel, alimenté par l'intermédiaire d'un pont redresseur, le contact d'impulsions qui est commandé par un montage électronique qui produit les impulsions étant constitué par un transistor (T1), caractérisé par le fait que pendant l'état de conversation (T1) est shunté directement à l'aide d'un contact (nsa2) libre disponible dans le dispositif de sélection et fermé à l'état de conversation, et que son circuit de base est interrompu.

0 004 901

FIG 2

7